Europäisches Patentamt

(19) European Patent Office

Office européen des brevets

(11) Publication number : **0 221 991**
**B1**

## (12) EUROPEAN PATENT SPECIFICATION

(45) Date of publication of patent specification :
30.08.89

(51) Int. Cl.⁴ : **E 02 B 5/08**, **E 03 F 5/14**

(21) Application number : 86903661.6

(22) Date of filing : 23.05.86

(86) International application number :
PCT/SE 86/00239

(87) International publication number :
WO/8607106 (04.12.86 Gazette 86/26)

(54) A DEVICE FOR COLLECTING AND DISCHARGING SOLID PARTICLES CARRIED BY FLOWING WATER.

(30) Priority : 24.05.85 SE 8502582

(43) Date of publication of application :
20.05.87 Bulletin 87/21

(45) Publication of the grant of the patent :
30.08.89 Bulletin 89/35

(84) Designated contracting states :
AT BE CH DE FR GB IT LI NL

(56) References cited :
SE—B— 436 416
US—A— 1 698 387
US—A— 1 773 576
US—A— 2 792 929

(73) Proprietor : HYDROPRESS WALLANDER & CO AB
Box 212
S-431 23 Mölndal (SE)

(72) Inventor : WALLANDER, Carl, Otto
Väglängdsgatan 24
S-421 33 Västra Frölunda (SE)

(74) Representative : Roth, Ernst Adolf Michael et al
GÖTEBORGS PATENTBYRA AB Box 5005
S-402 21 Göteborg (SE)

## Description

The present invention refers to a device for collecting and discharging solid particles carried by flowing water, and incorporating a grid structure of stationary and displaceable bars, the edges of said bars, facing the water flow direction being step formed, wherein the displaceable bars are interconnected to at least one unit, which is actuable by means of a driving mechanism which gives the displaceable bars a closed motion path mainly in the plane of the bars, the upward motion component of which is somewhat bigger than the step height of the stationary bars.

### Background of the invention

A device of the type mentioned above is known from US-1 733 576. A disadvantage with this device is that it has movable parts of the driving mechanism situated below the water level, where they are exposed to the impurities and particles carried by the water. Another disadvantage is that the grid must be given rather a big inclination relative to the vertical, whereby the grid will be long. Another disadvantage is the difficulty to limit the grid transversly, in view of the slewing brackets, which transfer the motion to the displaceable bars and which means that the water can pass beside the grid, but also that objects which are pulled up by the device can fall from the grid and down into the water which has passed the grid. As grids of this type are mostly used for rinsing of waste water, hair and other fibre-like particles are a big disadvantage, which get stuck on all stationary parts and lastly even may stop their motions.

### Purpose and essential features of the invention

The object of the present invention is to provide a device of the type mentioned in the introduction, which has no displaceable parts below the water level, beside the displaceable rods, which laterally does not leave any open spaces where the water can flow by, and a structural design of the grid whereby this is self-rinsing. The construction furthermore shall be simple, easy to assemble and dismount and almost completely maintenance free. These objects have been solved in that the unit of displaceable bars is limited by side plates substantially parallel to the displaceable bars and rigidly affixed these to, said side plates forming side protections and limiting the grid laterally, that the driving mechanism is arranged to transfer the motion to the displaceable bars via said side plates and that the stationary and/or the displaceable bars at the side turned away from the step-formed side are provided at least partially with saw teeth.

### Description of the drawings

The invention in the following will be further described with reference to the accompanying drawings which show some embodiments.

Figure 1 shows in a side view and partly in section the device according to the invention.

Figure 2 is a section along line II-II in figure 1.

Figure 3 shows the device according to figure 1 and 2 in a top view.

Figures 4 and 5 show sections along lines IV-IV and V-V in figure 1.

Figure 6 shows in enlarged scale a side view of the stationary and the displaceable rods forming part of the device according to a modified embodiment.

### Description of the embodiments

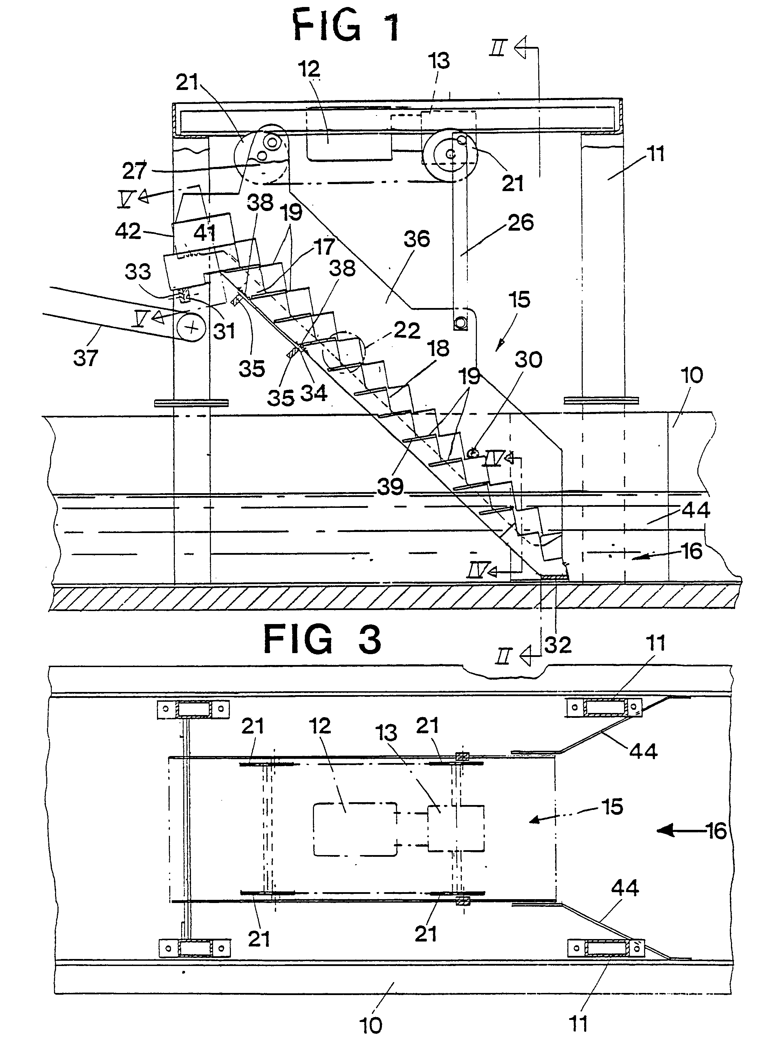

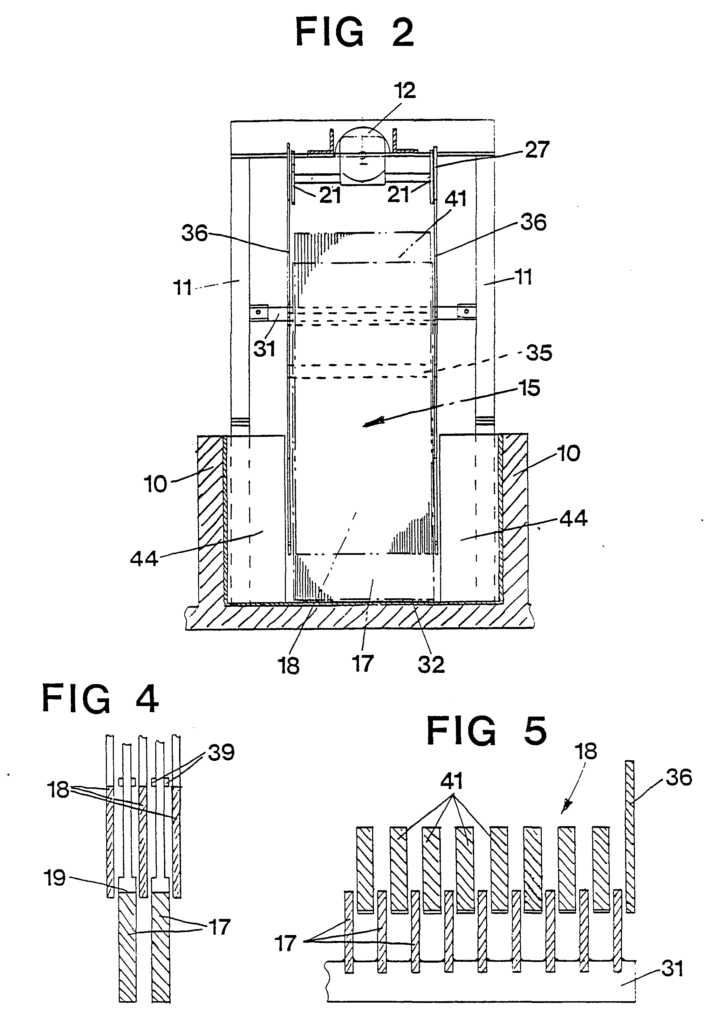

The collecting and discharging device according to the invention, such as shown in figures 1 and 2, is placed with its frame 11 in a conduit 10 or a trench, through which the water to be cleaned is flowing. On the frame, there is i.a. arranged a driving motor 12 provided with a gear box 13, for driving two pairs of eccentric discs 21, which support the discharging part 15 of the device and provides its discharging motion.

The discharging part 15 consists of a plurality of parallel bars having stepped side edges, which are facing the water, e.g. waste water, coming in in the direction of the arrow 16. Every second bar 17 is stationary and every second bar 18 is displaceable. The set of bars thus form a stationary grid portion and a displaceable grid portion, whereby the displaceable bars 18 will follow the motion of the eccentric discs, which in the embodiment shown means that the displaceable step surfaces 19 will move in a closed circular motion path 22. The step surfaces 19 of the bars, respectively, are located substantially horizontally or possibly with a slight inclination inwards, as seen from the front side of the step surfaces, when the device is mounted in the conduit 10 for operation.

The discharging part 15 extends above the conduit 10 and is principally a unit forming a combined grid and a step conveyor.

The stationary bars 17 of the grid at their upper and lower parts are connected to each other by means of connecting members 31 and 32 attached to the lower edge, e.g. in the form of welded flat bars, forming a unit, which at its upper part is attached to attachements 33 arranged on the frame, while the lower part rests on and is attached to the bottom of the conduit 10. Also the displaceable bars 18 form an integral unit and for this purpose they are provided with a portion 34 projecting downwards, and to the lower side of which are welded transverse connecting members 35 also in the form of flat bars or the like. The two outermost bars in the movable unit are designed as side plates 36, with essentially larger height than the other bars and they lack the step surfaces 19. Also these side plates 36 are welded to the connecting members 35. The unit of displaceable bars 18 is supported in the side plates 36, via arms 26 pivoted thereto and a fixed arm 27 arranged on each side plate. The arms 26 and 27 are rotatably supported on the eccentric discs 21. The side plates 36, which limit the grid laterally have for a purpose to prevent the discharged goods 30 from not falling down along the sides of the grid and back to the filtered liquid. By means of flow deflectors 44 which extend from the side walls of the conduit 10 and overlap the side plates 36, the water is guided towards the discharging device 15.

The construction with the stationary side plates 36 also offers great advantages with respect to mounting, since the entire unit can be manufactured and mounted in a factory. In case a breakdown should occur it is possible with simple hand grips to replace the stationary bars or the displaceable bars, each as an integral unit, in a very short time.

The contaminations which follow the flow of waste water through the conduit 10 will be stopped by the grid, formed by the rods 17 and 18. Depending on the particular relative motion between the horizontal step surfaces 19, a vertical effective motion component is obtained, which lifts the goods successively upwards along the step surfaces of the stationary rods 17, as the movable step surfaces make their collecting and depositing motion.

Waste water and the like often contains large amounts of hair and fibres, but also plastic bags and the like, which can get stuck behind the supporting structure of the bars, i. e. the connecting members 31 and 35, so that the grid in a rather short time will become more or less blocked or even that the relative movement between the bars will be obstructed or prevented. It furthermore has been a problem to convey the discharged material 30 away from the uppermost step, thus that it can be removed by a following conveyor, e. g. an endless belt 37. In order to avoid blocking of the grid, the stationary bars 17 at their lower edge facing away from the step surfaces 19 are preferably provided with saw teeth 38 or the like, at least at the portions located opposite the connecting members 35 of the displaceable bars 18. Every time the displaceable rods make a working stroke, i. e. a closed circular motion path 22, the saw teeth 38 at the passage of the flat bars 35 will tear loose any objects, that have become stuck on the flat bars. A further rinsing effect between the bars 17 and 18 is provided by means of spacing and rinsing members 39 attached thereto, and preferably being arranged in parallel to the flow direction of the water and welded to one or both of the flat sides of the stationary and/or the displaceable bars. The rinsing members 39 are arranged in level with each step surface 19, resp., but it is also possible to arrange these more sparsely, for example at every other or every third step surface.

The continued conveyance of the discharged material, after it has reached the uppermost step, is brought about by means of extended portions 40 and 41 arranged at the upper end of the stationary bars 17 as well as of the displaceable bars 18, said extended portions being arranged horizontally or slightly inclined in a direction from the uppermost step. In order to prevent objects from becoming stuck between the bars, the extended portions 41 of the displaceable bars 18 in this area are designed with such a thickness that the space between the stationary rods 17 is substantially filled out, so that there is only a small clearance left, such as shown in figure 5. For preventing hair and other objects from becoming stuck in the connecting members 31 of the stationary bars 17 also within this area, the lower edges of the portions 41 of the displaceable bars 18 are preferably provided with saw teeth 42, which in the same way as the saw teeth 38 at each working stroke will come so close to the connecting member 31 that a rinsing is performed.

For preventing opening of the lowermost part of the grid corresponding to a double slot width at the upward stroke of the displaceable bars, and thus allowing larger objects to pass through these slots, the stationary bars 17 are at their lower part designed with a bigger thickness of material, such as shown in figure 4, so that the slots in the lowermost part 43 of the grid are mainly closed when the displaceable bars are in their lower position.

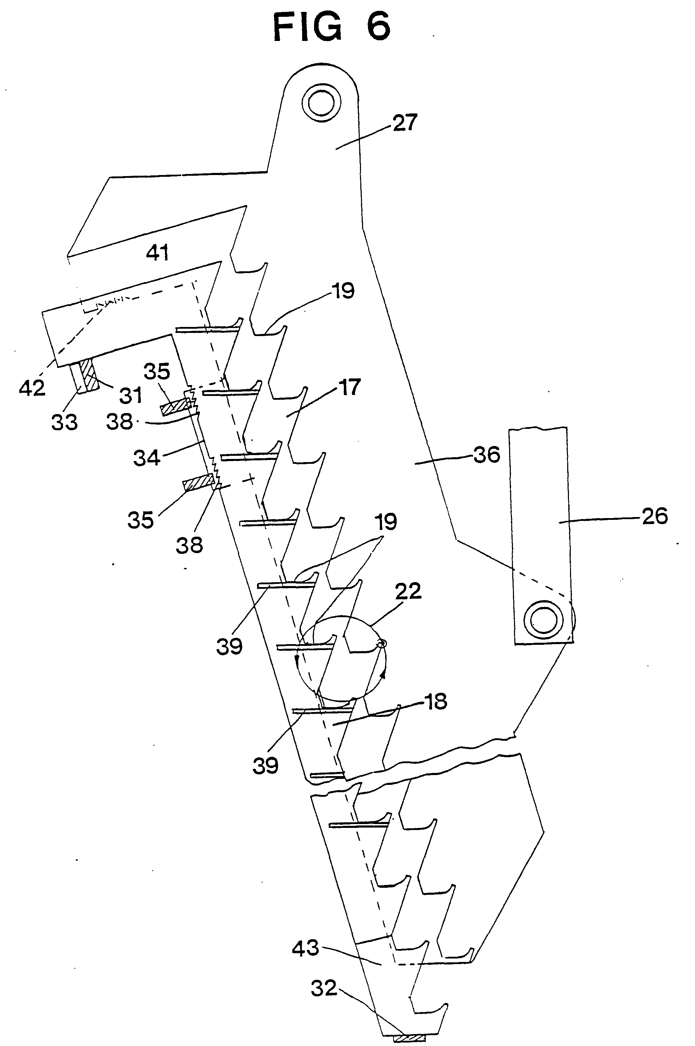

Certain types of objects which come along with the flowing water can be difficult to transport on the device according to the invention, since these objects can roll or slip off the horizontal step surfaces. Such objects may be bottles, cans but also and the like. In order to discharge such objects, as shown in the embodiment in figure 6, it is suggested that the step surfaces 19 of the stationary bars 17 as well as of the displaceable bars 18 are designed with a cupped or downward tapering shape.

## Claims

1. A device for collecting and discharging solid particles carried by flowing water, and incorporating a grid structure (15) of stationary and displaceable bars (17, 18), the edges of said bars facing the water flow direction being step-formed, wherein the displaceable bars (18) are interconnected to form at least one unit, which is actuable by means of a driving mechanism (12), which gives the displaceable bars (18) a closed motion path mainly in the plane of the bars, the upwards motion component of which is somewhat bigger than the step height of the stationary bars (17), characterized thereby, that the unit of displaceable bars (18) is limited by side plates (36), which are arranged substantially in parallel to the displaceable bars and being fixed there to, said side plates forming side protections and limiting the grid laterally, that the driving mechanism (12) is arranged to transfer the motion to the displaceable bars (18) via said side plates and that the stationary and/or the displaceable bars (17, 18) on the side turned away from the step-formed side are provided at least partially sich saw teeth (38, 42).

2. A device according to claim 1, characterized thereby, that the stationary bars (18) as well as the displaceable rods (17) at their upper end are provided with a horizontal or slightly inclined portion and that at least the displaceable or the stationary bars (17, 18) on the lower side of said portions are formed with saw teeth (42).

3. A device according to claim 1 or 2, characterized thereby, that the step surface (19) of the stationary as well as the displaceable bars (17, 18) in the plane of the rods are formed with a downwardly tapering shape.

4. A device according to claim 1, characterized thereby, that the step surfaces (19) are partly circular.

5. A device according to claim 1, characterized thereby, that the stationary and/or the displaceable bars (17, 18) at least on one flat side are provided with spacing and rinsing means (39).

6. A device according to claim 5, characterized thereby, that the spacing and rinsing means (39) are arranged in level with the step surfaces (19) and essentially in parallel with the flow direction of the water.

7. A device according to claim 1, characterized thereby, that the lower end portions and the upper extended portions (40) of the stationary bars (17) are designed with a goods thickness mainly corresponding to the distance between the displaceable bars (18).


## Patentansprüche

1. Vorrichtung zum Sammeln und Abgeben von Feststoffen, die von strömendem Wasser mitgenommen werden, mit einem Rost (15) aus feststehenden und beweglichen Stäben (17, 18), deren der Strömungsrichtung zugewandte Flächen abgestuft sind, wobei die beweglichen Stäbe (18) miteinander verbunden sind, um wenigstens eine Einheit zu bilden, die mittels eines Antriebsmechanismus (12) betätigbar ist, der den beweglichen Stäben (18) eine geschlossene Bewegungsbahn im wesentlichen in der Ebene der Stäbe verleiht, wobei deren aufwärtige Bewegungskomponente etwas größer als die Stufenhöhe der feststehenden Stäbe (17) ist, dadurch gekennzeichnet, daß die Einheit der beweglichen Stäbe (18) durch Seitenplatten (36) begrenzt ist, die im wesentlichen parallel zu den beweglichen Stäben angeordnet und an diesen befestigt sind, daß die Seitenplatten einen seitlichen Schutz bilden und den Rost seitlich begrenzen, daß der Antriebsmechanismus (12) derart angeordnet ist, daß er die Bewegung der beweglichen Stäbe (18) mittels der genannten Seitenplatten überträgt, und daß die feststehenden und/oder beweglichen Stäbe (17, 18) auf der der gestuften Seite abgewandten Seite wenigstens teilweise mit Sägezähnen (38, 42) ausgerüstet sind.

2. Vorrichtung nach Anspruch 1, dadurch gekennzeichnet, daß die feststehenden Stäbe (18) wie auch die beweglichen Stäbe (17) an ihren oberen Enden mit einem horizontalen oder geringfügig geneigten Bereich versehen sind, und daß wenigstens die beweglichen oder die feststehenden Stäbe (17, 18) auf der Unterseite des genannten Bereiches mit Sägezähnen (42) ausgestattet sind.

3. Vorrichtung nach Anspruch 1 oder 2, dadurch gekennzeichnet, daß die Stufenfläche (19) der feststehenden wie auch der beweglichen Stäbe (17, 18) in der Ebene der Stäbe mit einer nach unten sich verjüngenden Gestalt versehen sind.

4. Vorrichtung nach Anspruch 1, dadurch gekennzeichnet, daß die Stufenflächen (19) teilweise kreisförmig sind.

5. Vorrichtung nach Anspruch 1, dadurch gekennzeichnet, daß die feststehenden und/oder beweglichen Stäbe (17, 18) wenigstens einer flachen Seite mit Abstands- und Spülmitteln (39) versehen sind.

6. Vorrichtung nach Anspruch 5, dadurch gekennzeichnet, daß die Abstands- und Spülmittel (39) auf demselben Niveau wie die Stufenflächen (19) und im wesentlichen parallel zur Strömungsrichtung des Wassers angeordnet sind.

7. Vorrichtung nach Anspruch 1, dadurch gekennzeichnet, daß die unteren Endbereiche und die oberen Vorsprünge (40) der feststehenden Stäbe (17) eine Materialstärke aufweisen, die im wesentlichen dem Abstand zwischen den beweglichen Stäben (18) entspricht.


## Revendications

1. Appareil de collecte et d'évacuation de particules solides transportées par un courant d'eau, comprenant une structure à grille (15) formée de barres fixes et mobiles (17, 18), les bords des barres tournés dans la direction d'écoulement de l'eau ayant des gradins, les barres mobiles (18) étant interconnectées afin qu'elles forment au moins un ensemble qui peut être commandé par un mécanisme d'entraînement (12) qui donne aux barres mobiles (18) un trajet fermé de déplacement essentiellement contenu dans le plan des barres, la composante ascendante de ce mouvement étant supérieure à la hauteur des gradins des barres fixes (17), caractérisé en ce que l'ensemble formé des barres mobiles (18) est limité par des plaques latérales (36) qui sont sensiblement parallèles aux barres mobiles et qui leur sont fixées, les plaques latérales formant des protections et limitant la grille latéralement, en ce que le mécanisme d'entraînement (12) est destiné à transmettre le mouvement aux barres mobiles (18) par l'intermédiaire des plaques latérales, et en ce que les barres fixes et/ou mobiles (17, 18) du côté opposé au côté ayant les gradins, comportent au moins partiellement des dents de scie (38, 42).

2. Appareil selon la revendication 1, caractérisé en ce que les barres fixes (18) et les barres mobiles (17), à leur extrémité supérieure, ont une partie horizontale ou légèrement inclinée, et au moins les barres mobiles ou les barres fixes (17, 18) ont des dents de scie (42) à la face inférieure desdites parties.

3. Appareil selon la revendication 1 ou 2, caractérisé en ce que la surface (19) de gradin des barres fixes aussi bien que des barres mobiles (17, 18) dans le plan des barres a une configuration dont la hauteur diminue vers le bas.

4. Appareil selon la revendication 1, caractérisé en ce que les surfaces des gradins (19) sont partiellement circulaires.

5. Appareil selon la revendication 1, caractérisé en ce que les barres fixes et/ou mobiles (17, 18) comportent, au moins d'un côté plat, un dispositif d'espacement et de nettoyage (39).

6. Appareil selon la revendication 5, caractérisé en ce que le dispositif d'espacement et de nettoyage (39) est placé au niveau des surfaces des gradins (19) et est pratiquement parallèle à la direction d'écoulement de l'eau.

7. Appareil selon la revendication 1, caractérisé en ce que les parties d'extrémité inférieure et les parties supérieures (40) des prolongements des barres fixes (17) sont réalisées avec une épaisseur correspondant pratiquement à la distance comprise entre les barres mobiles (18).

# FIG 1

# FIG 3

# FIG 2

# FIG 4

# FIG 5

# FIG 6